(19) Europäisches Patentamt
European Patent Office
Office européen des brevets

(11) **EP 1 953 710 B1**

(12) **EUROPEAN PATENT SPECIFICATION**

(45) Date of publication and mention
of the grant of the patent:
**08.11.2017 Bulletin 2017/45**

(51) Int Cl.:
***G07D 7/20*** *(2016.01)* ***G07D 7/12*** *(2016.01)*

(21) Application number: **08150449.0**

(22) Date of filing: **21.01.2008**

(54) **Counterfeit Deterrence Using Dispersed Miniature Security Marks**

Fälschungsabschreckung mittels verstreuter Miniatursicherheitsmarkierungen

Dissuasion de la contrefaçon à l'aide de marques de sécurité miniatures dispersées

| | |
|---|---|
| (84) Designated Contracting States: **DE FR GB** | (72) Inventor: **Fan, Zhigang Webster, NY 14580 (US)** |
| (30) Priority: **23.01.2007 US 656667** | (74) Representative: **Grünecker Patent- und Rechtsanwälte PartG mbB Leopoldstraße 4 80802 München (DE)** |
| (43) Date of publication of application: **06.08.2008 Bulletin 2008/32** | |
| (73) Proprietor: **Xerox Corporation Rochester, New York 14644 (US)** | (56) References cited: **EP-A- 0 917 113       EP-A- 1 059 800 US-A1- 2002 044 677** |

## Description

BACKGROUND AND SUMMARY

This disclosure relates generally to methods and systems for counterfeit prevention, and more particularly to a system and method for utilizing and detecting dispersed miniature security marks to distinguish authentic documents and/or images from counterfeit documents and/or images.

Current counterfeit prevention systems are mainly based on the use of digital watermarks, a technique which permits the insertion of information (e.g., copyright notices, security codes, identification data, etc.) to digital image signals and documents. Such data can be in a group of bits describing information pertaining to the signal or to the author of the signal (e.g., name, place, etc.). Most common watermarking methods for images work in spatial or frequency domains, with various spatial and frequency domain techniques used for adding watermarks to and removing them from signals.

For spatial digital watermarking the simplest method involves flipping the lowest-order bit of chosen pixels in a gray scale or color image. This works well only if the image will not be subject to any human or noisy modification. A more robust watermark can be embedded in an image in the same way that a watermark is added to paper. Such techniques may superimpose a watermark symbol over an area of the picture and then add some fixed intensity value for the watermark to the varied pixel values of the image. The resulting watermark may be visible or invisible depending upon the value (large or small, respectively) of the watermark intensity.

Spatial watermarking can also be applied using color separation. In this approach, the watermark appears in only one of the color bands. This type of watermark is visibly subtle and difficult to detect under normal viewing conditions. However, when the colors of the image are separated for printing or xerography, the watermark appears immediately. This renders the document useless to the printer unless the watermark can be removed from the color band. This approach is used commercially for journalists to inspect digital pictures from a photo-stockhouse before buying un-watermarked versions.

There are several drawbacks to utilizing digital watermarking technology. To retrieve a watermark, extraction hardware and/or software is generally employed. Because a digital watermark usually has a fairly large footprint, detectors employed to read the digital watermarks often require significant buffering storage, which increases detection costs.

An alternate counterfeit prevention system, miniature security marks, may be utilized to remedy this problem. Miniature Security Marks (MSMs) are composed of small, virtually invisible marks that form certain configurations. The MSMs can be embedded in documents or images to be protected. When the documents or images are scanned, processed, and sent to a printer, the MSM detectors in the imaging system may recognize the embedded MSM marks and defeat the counterfeit attempts. The MSM has an advantage over existing technologies, such as watermarking, in that it requires only very simple and inexpensive detectors. Consequently, the MSM may be applied to many devices in a cost-effective manner. Although the MSM marks are invisible or almost invisible to the unaided human eye due to their small sizes, it would be preferable to further reduce their visibility for the enhancement of security.

The following patents or publications are noted:

U.S. Patent Application Publication No. 2006/0115110 to Rodriguez et al. ("Authenticating Identification and Security Documents") describes a system for authenticating security documents in which a document includes a first surface having a first and second set of print structures and a second surface. The sets of print structures cooperate to obscure the location on the first surface of the second set of print structures. The second set of print structures is arranged on the first surface so to provide a reflection pattern, such as a diffraction grating. The second set of print structures is preferably provided with metallic ink on the first surface.

U.S. Patent No. 6,694,042 to Seder et al. ("Methods for Determining Contents of Media") enables a variety of document management functions by printing documents with machine readable indicia, such as steganographic digital watermarks or barcodes. The indicia can be added as part of the printing process (after document data has been output by an originating application program), such as by printer driver software, by a Postscript engine in a printer, etc. The indicia can encode data about the document, or can encode an identifier that references a database record containing such data. By showing the printed document to a computer device with a suitable optical input device, such as a webcam, an electronic version of the document can be recalled for editing, or other responsive action can be taken.

U.S. Patent No. 7,002,704 to Fan ("Method and Apparatus for Implementing Anti-counterfeiting Measures in Personal Computer-based Digital Color Printers") teaches a system for rendering an electronic image representation associated with a software application program. The system includes a PC-based host processor programmed to execute the software application program, a temporary storage device associated with the host processor, and a printer interfaced to the host processor. A printer driver routine is operative on the host processor and determines whether the electronic image representation is of a counterfeit document by examining at least a portion of the electronic image representation when stored in the temporary storage device during the course of printing the electronic image representation at the printer.

EP 0 917 113 A2 describes seal detection system and method. A currency detection method that detects seals on currency in order to prevent printing and defeat counterfeiting. Seal patterns are detected. The detector has the ability to identify whether an image contains one or several pre-selected seal patterns. The detection is rotational and shift invariant -- a suspect mark can be in any orientation and at any location within a tested image. With the method: a detector is trained offline with distinctive marks resulting in templates which are generated and recorded for each of said distinctive; sample images bearing suspect marks are received by said detector and the location and orientation of said suspect marks are identified; said templates are rotated and shifted for alignment of said templates to said suspect marks; said templates and said suspects marks are compared to determine whether there is a match.; A microprocessor is programmed to become familiarized with a plurality of distinctive marks through training and to analyze and detect seals within tested documents. A memory stores the marks as templates. A scanner may be used with the system during training and detection to capture marks and tested images bearing marks for use by the system. The resulting output can be used by controlled systems, such as copiers and scanners, to suspend further action on documents where counterfeiting is suspected.

EP 1 059 800 A2 describes a digital imaging method and apparatus for detection of document security marks. The present invention provides in one aspect a method of digitally processing images, comprising the steps of: potentially including in a printed document a security mark defined by a plurality of actual mark constituents, processing the image data to identify potential constituents, for each potential mark constituent represented by said digital image data, determining if said potential mark constituent, together with at least one other potential mark constituent represented by said digital data, defines a potential security mark, and, for each potential security mark represented in said digital image data, determining if said potential security mark represents an actual security mark present in said printed document. In a second aspect there is provided a digital image processing method for preventing unauthorized reproduction of a printed document.; In a third aspect there is provided a method of processing digital image data representing a color printed document that includes a security mark.

US 2002/0044677 A1 describes denomination identification. A method and apparatus for identifying the denomination of a sample currency bill. The method comprises: scanning the sample currency bill to generate a number of sample patterns, each sample pattern representing variations in properties of a respective bill portion of the scanned sample currency bill; correlating each sample pattern with a number of master patterns, each master pattern representing variations in the properties of a respective bill portion of a respective denomination currency bill, each bill portion containing at least a predetermined number of bill features, the bill features allowing different denominations of currency bill to be distinguished; and determining the denomination of the sample currency bill in accordance with the result of the correlation.

SUMMARY OF THE INVENTION

It is the object of the present invention to improve counterfeit prevention of documents. This object is achieved by providing a method for detection of miniature security mark configurations within documents and images according to claim 1 and a system for detection of miniature security mark configurations within documents and images according to claim 10. Embodiments of the invention are set forth in the dependent claims.

BRIEF DESCRIPTION OF THE DRAWINGS

The patent or application file contains at least one drawing executed in color. Copies of this patent or patent application publication with color drawings will be provided by the Office upon request and payment of the necessary fee.

The foregoing and other features of the embodiments described herein will be apparent and easily understood from a further reading of the specification, claims and by reference to the accompanying drawings in which:

FIG. 1 is an illustration of one embodiment of a standard MSM configuration;
FIG. 2 is an illustration of one embodiment of a dispersed MSM configuration;
FIG. 3 is an illustration of the dispersed MSM according to FIG. 2 at a greater enlargement;
FIG. 4 is a functional block diagram of one exemplary embodiment of a system for detection of dispersed MSMs in documents and/or images;
FIG. 5 is a flowchart outlining one exemplary embodiment of the method for detecting dispersed MSMs in documents and/or images;
FIG. 6 is a flow chart outlining one exemplary embodiment of group configuration checking; and
FIG. 7 is a flow chart outlining one exemplary embodiment of a method for matching MSM location points in a group with a template configuration.

DETAILED DESCRIPTION

In the following detailed description, reference is made to the accompanying drawings, which form a part hereof, and in which is shown by way of illustration specific illustrative embodiments in which the invention may be practiced. These embodiments are described in sufficient detail to enable those skilled in the art to practice the invention, and it is to be understood that other embodiments may be utilized and that logical, mechanical and electrical changes may be made without departing from the scope of the disclosure. The following detailed description is, therefore, not to be taken in a limiting sense.

Dispersed MSMs provide enhanced security features as compared to standard MSMs due to their reduction in visibility. MSMs are differentiated from image content and noise in three aspects: MSMs have significant color differences from the image background; each MSM has a pre-determined shape (circle, square, etc.); and MSMs form certain pre-determined patterns. For hierarchical MSMs, the patterns can be decomposed into two layers, a bottom layer with a fixed pattern, and a top layer, which specifies the relative positions and orientations of the bottom layer groups. For the purposes of the discussion herein, the term MSM will include both hierarchical and non-hierarchical MSMs. MSM configurations and characteristics are described more fully in copending U.S. Application No. 11/317,768 to Fan ("Counterfeit Prevention Using Miniature Security Marks") and U.S. Application No. 11/472,695 to Fan ("Hierarchical Miniature Security Marks") both assigned to the same assignee of the present application. A dispersed MSM is defined for the purposes herein as an MSM that consists of a plurality of scattered dots. The distribution of the dots within the MSM is arbitrary and may be either uniform or nonuniform.

The system includes an analyzer and a database that stores mark parameter information. The detection method includes sub-sampling to prepare a coarse image that can be analyzed efficiently. Using the coarse image, maximum/minimum points are detected using a mark feature, such as the color difference between the marks and the background. A group of candidate marks is isolated and evaluated to determine if they form predetermined patterns. The dot parameters of the marks are then verified based on specified templates.

Various computing environments may incorporate capabilities for supporting a network on which the system and method for dispersed MSMs may reside. The following discussion is intended to provide a brief, general description of suitable computing environments in which the method and system may be implemented. Although not required, the method and system will be described in the general context of computer-executable instructions, such as program modules, being executed by a single computer. Generally, program modules include routines, programs, objects, components, data structures, etc., that perform particular tasks or implement particular abstract data types. Moreover, those skilled in the art will appreciate that the method and system may be practiced with other computer system configurations, including hand-held devices, multi-processor systems, microprocessor-based or programmable consumer electronics, networked PCs, minicomputers, mainframe computers, and the like.

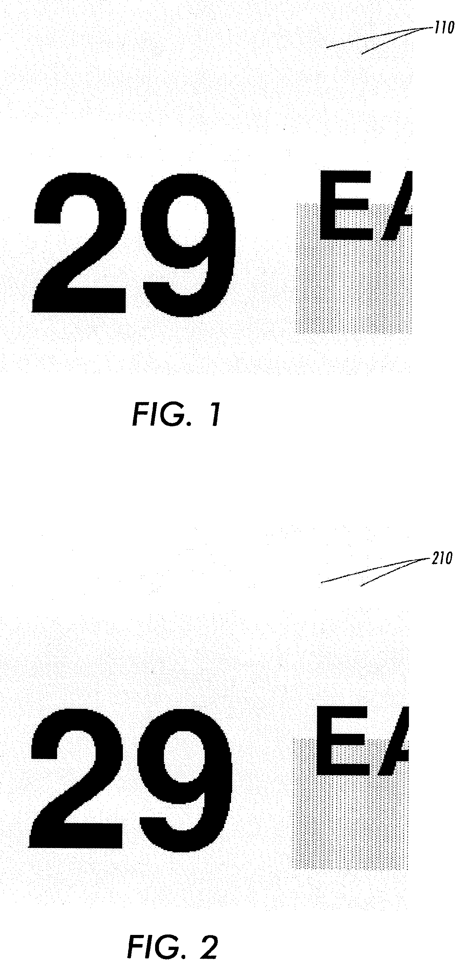

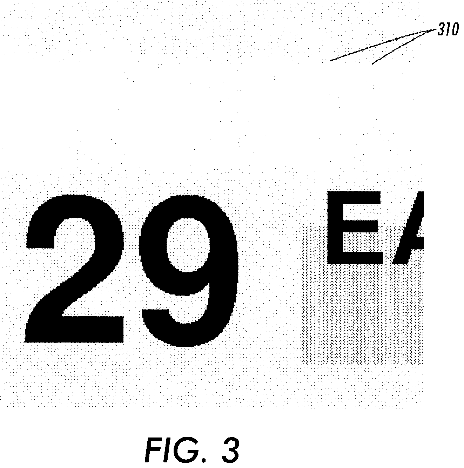

Referring to Figure 1, there is shown an illustration of a standard MSM in an enlarged version for ease of viewing. Standard MSMs are objects in the size range of 0.1-1.0 millimeter with pre-determined shapes, such as circle, square, rectangle, etc. In this illustration the standard MSMs consist of seven yellow marks 110 in a pattern on a partial sample document. In contrast to this, the dispersed MSMs disclosed herein are composed of a group of scattered dots much smaller in size (.08 - .25 millimeter) than standard MSMs. An example illustration of one embodiment of a dispersed MSM configuration is shown in Figure 2, in which each MSM is composed of a group of scattered, or dispersed, yellow dots 210. For the purposes of illustration and comparison, the same general configuration with a similar detection accuracy and the same enlargement level as Figure 1 is shown. The dispersed MSM may be in the form of a group of dots that are scattered over a small region, for example a circle with a pre-determined radius. The total area of the dots determines the discriminant power, and thus the detection accuracy. Distribution of the dots is arbitrary, but some advantages may be achieved by uniformity. The size of the dots is determined by visibility and printability concerns, since some print engines may not reliably print extremely small dots. While for the purposes of illustration all MSMs are shown as being dispersed and of a similar set of parameters (number of dots per mark, dot size and dot distribution), it is noted that an MSM configuration may include both dispersed and non-dispersed MSMs and MSMs of varying parameters. A further enlargement is provided in Figure 3, showing the dispersed MSMs 310. While for the purposes of illustration yellow dispersed MSMs are presented, the dispersed MSMs may be of any color that provides significant color differences from the image background. Additionally, each dispersed MSM may take the form of various pre-determined dot parameters, (the number of the dots per MSM, dot size, and dot distribution etc.), which are used to form certain pre-determined patterns, all of which are contemplated by the specification and scope of the claims herein.

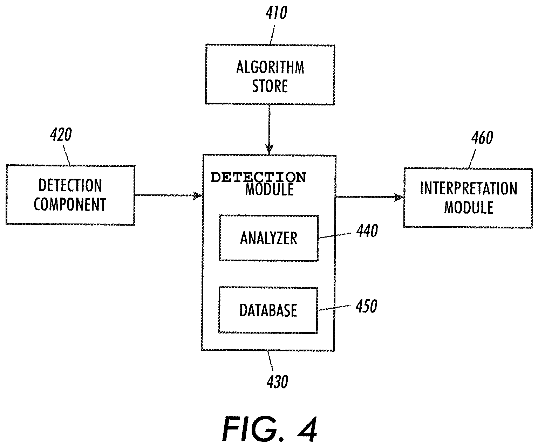

Referring to Figure 4, there is depicted a functional block diagram of one example embodiment of a system for detecting dispersed MSMs in documents and/or images. A security mark as used herein can be any mark (e.g., depression, impression, raised, overlay, etc.) that is applied to a recipient such as an image, a graphic, a picture, a document, a body of text, etc. The security mark can contain information that can be detected, extracted and/or interpreted. Such information can be employed to prevent counterfeiting by verifying that the information contained within the security mark is accurate, thereby verifying the authenticity of the recipient upon which the security mark is applied.

In one example, a security mark has a dispersed MSM configuration that includes at least one dispersed data mark and at least two dispersed anchor marks. The dispersed MSMs may have different colors and dot parameters. In particular, the anchor marks within an MSM configuration have at least one attribute (e.g., color, number of dots per MSM, dot size, dot distribution etc.) that is different than the at least one data marks. In this manner, no anchor mark can have all the same attributes of any data mark.

The location, color and/or dot parameters of the one or more data marks can determine the information contained therein. For example, an MSM configuration can contain nineteen data marks and two anchor marks. The color and dot parameters of both the anchor marks and data marks can be known such that the anchor marks can be distinguished from each other. In addition, the location of the anchor marks in each MSM configuration can be known to each other and known relative to the one or more data marks. In this manner, information can be stored and extracted from a MSM configuration utilizing one or more algorithms associated therewith. The one or more algorithms can utilize at least one of mark location, color and dot parameters to store and/or extract data from a MSM configuration.

Anchor marks can be employed to limit the amount of computational overhead employed in the detection and extraction of an MSM configuration. For example, greater detection requirements can be necessary since the rotation, shift and/or scaling of an image (and MSM configuration applied therein) is unknown. As a result, the computational complexity may grow exponentially as the number of marks increases. Generally, anchor marks can allow rapid determination of the location of an MSM configuration. In particular, the location of the at least one data mark relative to the anchor marks within the MSM configuration can be quickly determined. In this manner, excessive computation overhead can be mitigated. Moreover, MSM configurations can create smaller footprints than the digital watermarks, which can lower buffering storage requirements. This is particularly beneficial when a greater number of data and/or anchor marks are employed. In one aspect, a detector can first identify the anchor marks, and then use them to determine location, orientation and scaling parameters. These parameters can be applied to locate the data marks at a linear computational complexity.

As shown in Figure 4, the system includes MSM detection module 430, algorithm store 410, and interpretation module 460. These devices are coupled together via data communication links, which may be any type of link that permits the transmission of data, such as direct serial connections.

The detection module 430 can employ one or more algorithms to extract information contained within one or more security marks. Algorithms can contain one or more formulae, equations, methods, etc. to interpret data represented by a particular security mark. In one example, the security mark is an MSM configuration wherein data is represented by two or more anchor marks and one or more data marks. The detection module 430 includes analyzer 440, which analyzes the location of the data marks relative to each other and/or relative to two or more anchor marks, as well as the location of the anchor marks relative to each other to insure that an MSM configuration exists in a particular location. The color and dot parameters etc. of the dots that compose the marks can also be analyzed to extract information contained within the one or more MSM configurations. Detection module 430 also includes database 450, which contains mark parameter information for each dispersed MSM.

The algorithm store 410 can be employed to store, organize, edit, view, and retrieve one or more algorithms for subsequent use. In one aspect, the detection module 430 can retrieve one or more algorithms from the algorithm store 410 to determine the information contained within an MSM configuration. In another aspect, the detection module 430 can determine the appropriate algorithm, methodology, etc. to extract information from one or more security marks and transmit such information to the algorithm store 410 for subsequent use.

The interpretation module 460 can determine the meaning related to data extracted from one or more security marks by the detection module 430. Such a determination can be made based on one or more conditions such as the location of the security mark, the recipient upon which the security mark is applied, the location of the system, one or more predetermined conditions, etc. In addition, a look up table, a database, etc. can be employed by the interpretation module 460 to determine the meaning of data extracted from a security mark. In one example, the security mark is related to the recipient upon which the security mark is applied. For instance, a data string "5jrwm38f6ho" may have a different meaning when applied to a one hundred dollar bill versus a one hundred euro bill.

The particular methods performed for detecting MSMs comprise steps which are described below with reference to a series of flow charts. The flow charts illustrate an embodiment in which the methods constitute computer programs made up of computer-executable instructions. Describing the methods by reference to a flowchart enables one skilled in the art to develop software programs including such instructions to carry out the methods on computing systems. The language used to write such programs can be procedural, such as Fortran, or object based, such as C++. One skilled in the art will realize that variations or combinations of these steps can be made without departing from the scope of the disclosure herein.

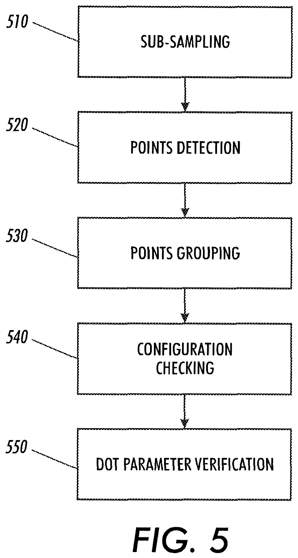

Turning now to Figure 5, a flowchart illustrates an example embodiment of the method for detecting dispersed MSMs in documents and/or images. At 510 sub-sampling is performed to generate a reduced-resolution version of the original image, which can be more efficiently analyzed. The sub-sampling and associated low-pass pre-smoothing reduce a dispersed MSM mark to a blurred spot that loses its detail information. The sub-sampling factor is selected such that the resulting mark size is reduced to about one pixel in the reduced-resolution image. Sub-sampling processes are well-known in the art and can be found, for example, in text books such as "Digital Picture Processing" by A. Rosenfeld and A. C. Kak, Academic Press, 1982. Maximum/minimum points detection is performed at 520, which divides the reduced-resolution image into disjoint windows, with each window having a plurality of pixels. In each window the maximum and/or minimum points are detected as the potential MSM locations. Depending on the MSM mark color, different color spaces may be operated on, and either maximum or minimum points identified. For example, if the marks are darker than the background in the L* component of the L*a*b* (the Commission Internationale de L'éclairage color standard) color space, the minimum value pixels in L* may be checked. The window size is chosen to be as large as possible with the constraint that no two marks will appear in the same window.

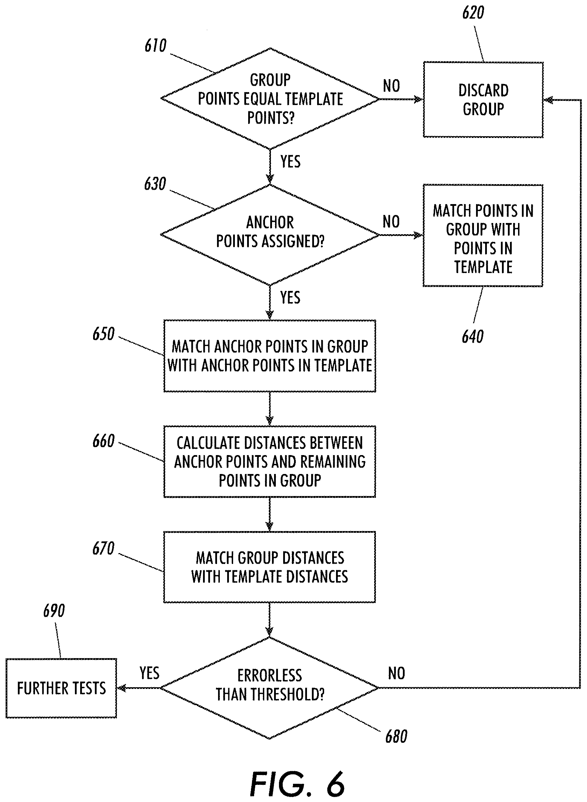

At 530 the system performs maximum/minimum points grouping, which includes grouping the points detected at 520 into clusters according to their location distances. Two points whose distance is smaller than a pre-determined threshold are considered to be in the same group and are candidates for the clusters. Group configuration checking is performed at 540 to match the groups obtained at 530 with a pre-defined template configuration, discussed more fully with reference to Figure 6 below. At 550 the system performs dot parameter verification in the original resolution rather than in the reduced resolution version. From each point (in the reduced-resolution image) in the groups that satisfy group configuration checking, the corresponding position in the original image is found. The mark, or the template is rotated, according to the group orientation, and the dot parameters are verified by template matching. As the marks of a dispersed MSM consists of scattered dots, the template is a description of the scattered dots, specifically, the number of the dots, their sizes and relative positions.

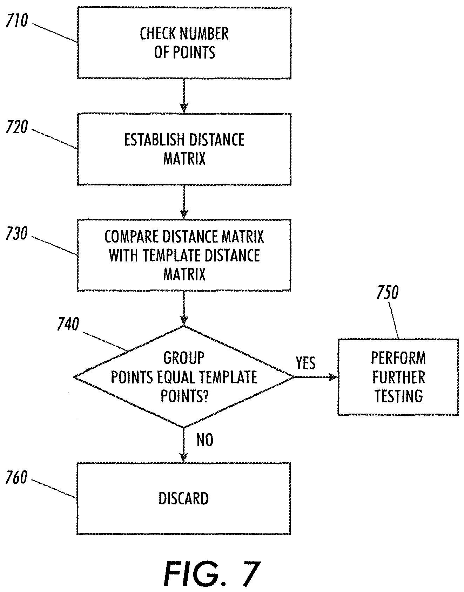

Turning now to Figures 6 and 7, the flow charts illustrate example embodiments for group configuration checking, which matches the groups obtained through maximum/minimum points grouping with a pre-defined template configuration for each group. For each group, the system determines at 610 if the number of points in the group is equal to the number of points in the template. If this is not the case, the group is discarded at 620. For the remaining groups, a determination is made at 630 as to whether anchor points have been assigned. If no anchor points have been assigned, as is usually the case with hierarchical MSM, for which the number of points contained in a group is relatively small, the distances between points in the group are matched with the distances between points in the template at 340, discussed more fully with respect to Figure 7 below.

Turning now to Figure 7, the method for matching the points in the group with points in the template (640 above) is described in more detail. At 710 the number of points in the group is checked. The distances among the points within the group are calculated and tabled at 720 in an NxN matrix D, in which N is the number of points in the group and D(i,,j) is the distance between points i and j. At 730 matrix D is compared to matrix T, which is another NxN matrix that records the distances between points in the template. Matching is accomplished by minimizing an error measure, for example,

$$E1 = \text{Min}_{i,j} \left[ \Sigma_{m,n>m} \mid D(i,j) - T(m, n) \mid \right].$$

The index m extends from 1 to N and the index n extends from M+1 to N, since the matrices are symmetric and the diagonal values are always 0. At 740 the system determines whether E1 is smaller than a pre-determined threshold. If the threshold has not been exceeded, the group will be further tested at 750. Otherwise, it is discarded at 760. For hierarchical MSMs, an additional test is required to determine if the groups form certain pre-defined relationships, with the operations dependent on the defined relationship. For example, if an MSM requires three identical pattern groups with two of them in the same orientation and the third group rotated 90 degrees, the orientations of the groups would be evaluated to determine if any of them contain a θ, θ, θ+90° pattern.

Returning to Figure 6, if anchor points have been defined, which is usual for a large group, the anchor points in the group are matched with the anchor points in the template. The anchor points typically differ in color from the rest points (non-anchor points) in the group, rendering them easily identifiable. The anchor points in the group are then matched with the anchor points in the template at 650, applying the method of Figure 7, except that it is applied only to anchor points, rather than to all points in the group. After the anchor points in the group and the template have been matched, the distances between the anchor points and the rest of the points in the group are calculated at 660. These distances are tabled into a KxM matrix D1, in which K and M are the number of anchor and non-anchor points, respectively, and D(m,i) is the distance between points m and i. Matrix D1 is matched to matrix T1, which records the anchor and non-anchor distances for the template, at 670. In this example embodiment, matching is accomplished by minimizing an error measure, for example,

$$E2 = \text{Min}_{i} \left[ \Sigma_{m,n} \mid D(m, i) - T(m, n) \mid \right].$$

The system determines whether E2 is smaller than a pre-determined threshold at 380. If the error is less than the threshold, the group will be further tested at 690. Otherwise, it is discarded at 620.

While the present discussion has been illustrated and described with reference to specific embodiments, further modification and improvements will occur to those skilled in the art. Additionally, "code" as used herein, or "program" as used herein, is any plurality of binary values or any executable, interpreted or compiled code which can be used by a computer or execution device to perform a task. This code or program can be written in any one of several known computer languages. A "computer", as used herein, can mean any device which stores, processes, routes, manipulates, or performs like operation on data.

**Claims**

1. A method for detection of miniature security mark configurations within documents and images, wherein the miniature security marks are in the form of dispersed miniature security marks and include data marks or a combination of data marks and anchor marks, the method comprising:

sub-sampling (510) a received image, wherein said received image comprises a digital representation of at least one possible recipient of the dispersed miniature security marks, wherein said sub-sampling (510) generates a reduced-resolution image of said received image, and wherein each said dispersed miniature security mark is comprised of a plurality of scattered dots; performing (520) maximum/minimum points detection using said reduced resolution image and using a mark feature, said mark feature comprising color difference between the miniature security marks and a background; grouping (530) said maximum/minimum points into at least one cluster according to location distances between said maximum/minimum points; checking (540) group configuration to match said clusters with a pre-defined template configuration; and performing (550) dot parameter verification to verify mark location and mark configuration between said received original resolution image and a pre-defined template dot specification, wherein from each point in the groups that satisfy group configuration checking, the corresponding position in the original image is found, and wherein said mark configuration includes at least one dispersed miniature security mark, wherein said pre-defined template dot specification includes a description of said plurality of scattered dots, wherein said description includes at least one dot parameter selected from the group comprising dot size, the number of said dots in said miniature security mark, and relative dot position.

2. The method according to claim 1, wherein said sub-sampling (510) further includes reducing miniature security mark size to approximately one pixel in said reduced-resolution image.

3. The method according to claim 1, wherein said sub-sampling (510) further includes low-pass pre-smoothing to cause miniature security marks to lose detail information.

4. The method according to claim 1, wherein performing (520) maximum/minimum points detection comprises:

dividing said reduced-resolution image into disjoint windows, wherein each said window includes a plurality of pixels; and detecting the maximum and/or minimum points in each window, wherein said maximum and/or minimum points are potential miniature security mark locations.

5. The method according to claim 4, wherein said windows have a size, wherein said size is subject to the constraint that two miniature security marks do not appear in a single said window.

6. The method according to claim 1, wherein said clusters include points whose distance does not exceed a pre-determined threshold.

7. The method according to claim 1, wherein checking (540) group configuration further comprises:

determining (610) if the number of points in said at least one cluster is equal to the number of points in said pre-defined template; if said number of points in said at least one cluster does not equal the number of points in said template, discarding said cluster; if said number of points in said at least one cluster equals the number of points in said template, determining whether anchor points have been defined within said cluster, wherein said anchor points comprise marks having at least one attribute different from the other marks within the miniature security mark configuration; if said anchor points have not been defined, matching the distances between points in said at least one cluster with the distances between points in said pre-defined template; if said anchor points have been defined, matching said anchor points within said cluster with anchor points in said pre-defined template; calculating (660) the distances between said anchor points and the remaining marks in said at least one cluster and placing said distances in a combined distance matrix, wherein said combined distance matrix includes the anchor and non-anchor distances for said at least one cluster; comparing said combined distance matrix with a combined template matrix, wherein said combined template matrix records the anchor and non-anchor distances between points in said pre-defined template;

minimizing an error measure;

determining (680) whether said error measure is smaller than a pre-determined threshold;

if said pre-determined threshold is exceeded, discarding said at least one cluster; and

if said pre-determined threshold is not exceeded, performing further testing operations to verify a match between said at least one cluster and said predefined template.

8. The method according to claim 7, wherein matching the distances between points in said at least one cluster with the distances between points in said pre-defined template comprises:

checking (710) the number of points in said at least one cluster;

calculating (720) the distances among the points within said at least one cluster and placing said distances in a distance matrix;

comparing (730) said distance matrix with a template matrix, wherein said template matrix records the distances between points in said pre-defined template;

minimizing an error measure;

determining (740) whether said error measure is smaller than a pre-determined threshold;

if said pre-determined threshold is exceeded, discarding (760) said at least one cluster; and

if said pre-determined threshold is not exceeded, performing (750) further testing operations to verify a match between said at least one cluster and said predefined template.

9. The method according to claim 8, wherein said further testing (750) operations are dependent on whether said at least one cluster forms pre-defined relationships.

10. A system for detection of miniature security mark configurations within documents and images, wherein the miniature security marks are in the form of dispersed miniature security marks and include data marks or a combination of data marks and anchor marks, the system comprising:

means for sub-sampling a received image, wherein said received image comprises a digital representation of at least one possible recipient of the dispersed miniature security marks, wherein said sub-sampling generates a reduced-resolution image of said received image, and wherein each said dispersed miniature security mark is comprised of a plurality of scattered dots;

means for performing maximum/minimum points detection using said reduced resolution image and using a mark feature, said mark feature comprising color difference between the miniature security marks and a background;

means for grouping said maximum/minimum points into at least one cluster according to location distances between said maximum/minimum points;

means for checking group configuration to match said clusters with a pre-defined template configuration; and

means for performing dot parameter verification to verify mark location and mark configuration between said received original resolution image and a pre-defined template dot specification, wherein from each point in the groups that satisfy group configuration checking, the corresponding position in the original image is found, and wherein said mark configuration includes at least one dispersed miniature security mark, wherein said pre-defined template dot specification includes a description of said plurality of scattered dots, wherein said description includes at least one dot parameter selected from the group comprising dot size, the number of said dots in said miniature security mark, and relative dot position.

**Patentansprüche**

1. Verfahren zur Erfassung von Miniatursicherheitsmarkierungskonfigurationen in Dokumenten und Bildern, wobei die Miniatursicherheitsmarkierungen in der Form verteilter Miniatursicherheitsmarkierungen vorliegen und Datenmarkierungen oder eine Kombination aus Datenmarkierungen und Festpunktmarkierungen aufweisen, wobei das Verfahren umfasst:

Unter-abtasten (510) eines empfangenden Bildes, wobei das empfangene Bild eine digitale Darstellung mindestens eines möglichen Empfängers der verteilten Miniatursicherheitsmarkierungen enthält, wobei das Unter-Abtasten (510) ein Bild mit reduzierter Auflösung des empfangenen Bildes erzeugt, und wobei jede verteilte Miniatursicherheitsmarkierung aus mehreren verstreuten Rasterpunkt aufgebaut ist;

Ausführen (520) einer Erfassung maximaler/minimaler Punkte unter Anwendung des Bildes mit reduzierter Auflösung unter Verwendung einer Markierungseigenschaft, wobei die Markierungseigenschaft einen Farbunterschied zwischen den Miniatursicherheitsmarkierungen und einem Hintergrund umfasst;

Gruppieren (530) der maximalen/minimalen Punkte in mindestens einen Cluster gemäß Positionsabständen zwischen den maximalen/minimalen Punkten;

Überprüfen (540) einer Gruppenkonfiguration bezüglich Übereinstimmung der Cluster mit einer vordefinierten Schablonenkonfiguration; und

Ausführen (550) einer Rasterpunktparameterverifizierung, um eine Markierungsposition und Markierungskonfiguration zwischen dem empfangenen Bild mit ursprünglicher Auflösung und einer vordefinierten Schablonenrasterpunktspezifizierung, wobei von jedem Punkt in den Gruppen, die einer Gruppenkonfigurationsprüfung standhalten, die entsprechende Position in dem ursprünglichen Bild ermittelt wird und wobei die Markierungskonfiguration mindestens eine verteilte Miniatursicherheitsmarkierung enthält, wobei die vordefinierte Schablonenrasterpunktspezifizierung eine Beschreibung der mehreren verstreuten Rasterpunkte enthält, und wobei die Beschreibung mindestens einen Rasterpunktparameter enthält, der ausgewählt ist aus der Gruppe: Rasterpunktgröße, Anzahl der Rasterpunkte in der Miniatursicherheitsmarkierung und relative Rasterpunktposition.

2. Verfahren nach Anspruch 1, wobei das Unter-abtasten (S510) ferner Reduzieren einer Miniatursicherheitsmarkierungsgröße auf ungefähr ein Pixel in dem Bild mit reduzierter Auflösung umfasst.

3. Verfahren nach Anspruch 1, wobei das Unter-abtasten (510) ferner eine vorgeordnete Glättung mit Tiefpass umfasst, um zu bewirken, dass Miniatursicherheitsmarkierungen Detailinformationen verlieren.

4. Verfahren nach Anspruch 1, wobei Ausführen (520) einer Erfassung von maximalen/minimalen Punkten umfasst:

Unterteilen des Bildes mit reduzierter Auflösung in nicht überlappende Fenster, wobei jedes Fenster mehrere Pixel enthält; und
Erfassen der maximalen und/oder minimalen Punkte in jedem Fenster, wobei die maximalen und/oder minimalen Punkte potentielle Miniatursicherheitsmarkierungspositionen sind.

5. Verfahren nach Anspruch 4, wobei die Fenster eine Größe haben und die Größe der Einschränkung unterliegt, dass zwei Miniatursicherheitsmarkierungen nicht in einem einzigen Fenster auftreten.

6. Verfahren nach Anspruch 1, wobei die Cluster Punkte enthalten, deren Abstand einen vorbestimmten Schwellenwert nicht übersteigt.

7. Verfahren nach Anspruch 1, wobei Überprüfen (540) eine Gruppenkonfiguration ferner umfasst:

Ermitteln (610), ob die Anzahl an Punkten in dem mindestens einen Cluster gleich der Anzahl an Punkten in der vordefinierten Schablone ist;
wenn die Anzahl an Punkten in dem mindestens einen Cluster nicht gleich der Anzahl an Punkten in der Schablone ist, Verwerfen des Clusters;
wenn die Anzahl an Punkten in dem mindestens einen Cluster gleich der Anzahl an Punkten in der Schablone ist, Ermitteln, ob Festpunkte in dem Cluster definiert worden sind, wobei die Festpunkte Markierungen mit mindestens einem Attribut enthalten, das sich von den anderen Markierungen innerhalb der Miniatursicherheitsmarkierungskonfiguration unterscheidet;
wenn die Festpunkte nicht definiert worden sind, Anpassen der Abstände zwischen Punkten in dem mindestens einen Cluster an die Abstände zwischen Punkten in der vordefinierten Schablone;
wenn die Festpunkte definiert worden sind, Anpassen der Festpunkte in dem Cluster an Festpunkte in der vordefinierten Schablone;
Berechnen (660) der Abstände zwischen Festpunkt und den verbleibenden Punkten in dem mindestens einen Cluster und Anordnen der Abstände in einer kombinierten Abstandsmatrix, wobei die kombinierte Abstandsmatrix die Festpunkt- und Nicht-Festpunkt-Abstände für den mindestens einen Cluster enthält;
Vergleichen der kombinierten Abstandsmatrix mit einer kombinierten Schablonenmatrix, wobei die kombinierte Schablonenmatrix die Festpunkt- und Nicht-Festpunkt-Abstände zwischen Punkten in der vordefinierten Schablone aufzeichnet;
Minimieren eines Fehlermaßes;
Ermitteln (680), ob das Fehlermaß kleiner als ein vorbestimmter Schwellenwert ist;
wenn der vorbestimmte Schwellenwert überschritten wird, Verwerfen des mindestens einen Clusters; und
wenn der vorbestimmte Schwellenwert nicht überschritten wird, Ausführen weiterer Prüfvorgänge, um eine Übereinstimmung zwischen dem mindestens einen Cluster und der vordefinierten Schablone zu verifizieren.

8. Verfahren nach Anspruch 7, wobei Anpassen der Abstände zwischen Punkten in dem mindestens einen Cluster an die Abstände zwischen Punkten in der vordefinierten Schablone umfasst:

Prüfen (710) der Anzahl an Punkten in dem mindestens einen Cluster;
Berechnen (720) der Abstände zwischen den Punkten innerhalb des mindestens einen Clusters und Anordnen der Abstände in einer Abstandsmatrix;

Vergleichen (730) der Abstandsmatrix mit einer Schablonenmatrix, wobei die Schablonenmatrix die Abstände zwischen Punkten in der vordefinierten Schablone enthält;

Minimieren eines Fehlermaßes;

Ermitteln (740), ob das Fehlermaß kleiner als ein vorbestimmter Schwellenwert ist;

wenn der vorbestimmte Schwellenwert überschritten wird, Verwerfen (760) des mindestens einen Clusters; und

wenn der vorbestimmte Schwellenwert nicht überschritten wird, Ausführen (750) weiterer Prüfvorgänge, um eine Übereinstimmung zwischen dem mindestens einen Cluster und der vordefinierten Schablone zu verifizieren.

9.  Verfahren nach Anspruch 8, wobei die weiteren Prüfvorgänge (750) davon abhängig sind, ob der mindestens eine Cluster vordefinierte Zusammenhänge bildet.

10. System zur Erfassung von Miniatursicherheitsmarkierungskonfigurationen in Dokumenten und Bildern, wobei die Miniatursicherheitsmarkierungen in der Form verteilter Miniatursicherheitsmarkierungen vorliegen und Datenmarkierungen oder eine Kombination aus Datenmarkierungen und Festpunktmarkierungen enthalten, wobei das System umfasst:

eine Einrichtung zur Unterabtastung eines empfangenden Bildes, wobei das empfangene Bild eine digitale Darstellung mindestens eines möglichen Empfängers der verteilten Miniatursicherheitsmarkierungen enthält, wobei die Unterabtastung ein Bild mit reduzierter Auflösung des empfangenen Bildes erzeugt und wobei jede verteilte Miniatursicherheitsmarkierung aus mehreren verstreuten Rasterpunkten aufgebaut ist;

eine Einrichtung zur Ausführung einer Erfassung maximaler/minimaler Punkte unter Anwendung des Bildes mit reduzierter Auflösung und unter Anwendung einer Markierungseigenschaft, wobei die Markierungseigenschaft einen Farbunterschied zwischen den Miniatursicherheitsmarkierungen und einem Hintergrund umfasst;

eine Einrichtung zur Gruppierung der maximalen/minimalen Punkte in mindestens einen Cluster gemäß Positionsabständen zwischen den maximalen/minimalen Punkten;

eine Einrichtung zur Prüfung einer Gruppenkonfiguration bezüglich Übereinstimmung der Cluster mit einer vordefinierten Schablonenkonfiguration; und

eine Einrichtung zur Ausführung einer Rasterpunktparameterverifizierung, um eine Markierungsposition und eine Markierungskonfiguration zwischen dem empfangenen Bild mit ursprünglicher Auflösung und einer vordefinierten Schablonenrasterpunktspezifizierung zu verifizieren, wobei von jedem Punkt in den Gruppen, die einer Gruppenkonfigurationsprüfung standhalten, die entsprechende Position in dem ursprünglichen Bild ermittelt wird, und wobei die Markierungskonfiguration mindestens eine verteilte Miniatursicherheitsmarkierung enthält, wobei die vordefinierte Schablonenrasterpunktspezifizierung eine Beschreibung der mehreren verstreuten Rasterpunkte enthält, und wobei die Beschreibung mindestens einen Rasterpunktparameter enthält, der ausgewählt ist aus der Gruppe: Rasterpunktgröße, Anzahl der Rasterpunkte in der Miniatursicherheitsmarkierung und relative Rasterpunktposition.

**Revendications**

1.  Procédé de détection de configurations de repères de sécurité miniatures à l'intérieur de documents et d'images, dans lequel les repères de sécurité miniatures se présentent sous la forme de repères de sécurité miniatures dispersés et comprennent des repères de données ou une combinaison de repères de données et de repères d'ancre, le procédé comprenant :

le sous-échantillonnage (510) d'une image reçue, dans lequel ladite image reçue comprend une représentation numérique d'au moins un destinataire possible des repères de sécurité miniatures dispersés, dans lequel ledit sous-échantillonnage (510) génère une image à résolution réduite de ladite image reçue, et dans lequel chaque ledit repère de sécurité miniature dispersé est composé d'une pluralité de dots disséminés ;

la réalisation (520) d'une détection de points maximum/minimum à l'aide de ladite image à résolution réduite et à l'aide d'une caractéristique de repère, ladite caractéristique de repère comprenant une différence de couleur entre les repères de sécurité miniatures et un arrière-plan ;

le groupement (530) desdits points maximum/minimum pour former au moins un ensemble en fonction de distances à l'emplacement entre lesdits points maximum/minimum ;

le contrôle (540) d'une configuration de groupe pour faire correspondre lesdits ensembles avec une configuration de modèle prédéfini ; et

la réalisation (550) d'une vérification de paramètre de dot pour vérifier un emplacement de repères et une configuration de repères entre ladite image à résolution initiale reçue et une spécification de dot de modèle prédéfini, dans lequel à partir de chaque point dans les groupes qui satisfont à un contrôle de configuration de groupe, la position correspondante dans l'image initiale est trouvée, et dans lequel ladite configuration de repères comprend au moins un repère de sécurité miniature dispersé, dans lequel ladite spécification de dot de modèle prédéfini comprend une description de ladite pluralité de dots disséminés, dans lequel ladite description comprend au moins un paramètre de dot sélectionné dans le groupe comprenant une taille de dot, le nombre desdits dots dans ledit repère de sécurité miniature et une position de dot relative.

**2.** Procédé selon la revendication 1, dans lequel ledit sous-échantillonnage (510) comprend en outre la réduction de la taille de repère de sécurité miniature à approximativement un pixel dans ladite image à résolution réduite.

**3.** Procédé selon la revendication 1, dans lequel ledit sous-échantillonnage (510) comprend en outre un pré-filtrage passe-bas pour amener les repères de sécurité miniatures à perdre des informations de détail.

**4.** Procédé selon la revendication 1, dans lequel la réalisation (520) d'une détection de points maximum/minimum comprend :

la division de ladite image à résolution réduite en fenêtres disjointes, dans lequel chaque ladite fenêtre comprend une pluralité de pixels ; et la détection des points maximum et/ou minimum dans chaque fenêtre, dans lequel lesdits points maximum et/ou minimum sont de potentiels emplacements de repères de sécurité miniatures.

**5.** Procédé selon la revendication 4, dans lequel lesdites fenêtres présentent une taille, dans lequel ladite taille est soumise à la contrainte par laquelle deux repères de sécurité miniatures n'apparaissent pas dans une unique ladite fenêtre.

**6.** Procédé selon la revendication 1, dans lequel lesdits ensembles comprennent des points dont la distance ne dépasse pas un seuil prédéterminé.

**7.** Procédé selon la revendication 1, dans lequel le contrôle (540) d'une configuration de groupe comprend en outre :

le fait de déterminer (610) si le nombre de points dans ledit au moins un ensemble est égal au nombre de points dans ledit modèle prédéfini ;

si ledit nombre de points dans ledit au moins un ensemble n'est pas égal au nombre de points dans ledit modèle, le rejet dudit ensemble ;
si ledit nombre de points dans ledit au moins un ensemble est égal au nombre de points dans ledit modèle, le fait de déterminer si des points d'ancre ont été définis à l'intérieur dudit ensemble, dans lequel lesdits points d'ancre comprennent des repères présentant au moins un attribut différent des autres repères à l'intérieur de la configuration de repères de sécurité miniatures ;
si lesdits points d'ancre n'ont pas été définis, le fait de faire correspondre les distances entre points dans ledit au moins un ensemble avec les distances entre points dans ledit modèle prédéfini ;
si lesdits points d'ancre ont été définis, le fait de faire correspondre lesdits points d'ancre à l'intérieur dudit ensemble avec des points d'ancre dans ledit modèle prédéfini ;
le calcul (660) des distances entre lesdits points d'ancre et les repères restants dans ledit au moins un ensemble et le placement desdites distances dans une matrice de distance combinée, dans lequel ladite matrice de distance combinée comprend les distances d'ancre et de non-ancre pour ledit au moins un ensemble ;
la comparaison de ladite matrice de distance combinée avec une matrice de modèle combinée, dans lequel ladite matrice de modèle combinée enregistre les distances d'ancre et de non-ancre entre des points dans ledit modèle prédéfini ;
la minimisation d'une mesure d'erreur ;
le fait de déterminer (680) si ladite mesure d'erreur est plus petite qu'un seuil prédéterminé ;
si ledit seuil prédéterminé est dépassé, le rejet dudit au moins un ensemble ; et
si ledit seuil prédéterminé n'est pas dépassé, la réalisation d'opérations d'essais supplémentaires pour vérifier une correspondance entre ledit au moins un ensemble et ledit modèle prédéfini.

**8.** Procédé selon la revendication 7, dans lequel le fait de faire correspondre les distances entre points dans ledit au moins un ensemble avec les distances entre points dans ledit modèle prédéfini comprend :

le contrôle (710) du nombre de points dans ledit au moins un ensemble ;
le calcul (720) des distances parmi les points à l'intérieur dudit au moins un ensemble et le placement desdites distances dans une matrice de distance ;
la comparaison (730) de ladite matrice de distance avec une matrice de modèle, dans lequel ladite matrice de modèle enregistre les distances entre points dans ledit modèle prédéfini ;
la minimisation d'une mesure d'erreur ;
le fait de déterminer (740) si ladite mesure d'erreur est plus petite qu'un seuil prédéterminé ;
si ledit seuil prédéterminé est dépassé, le rejet (760) dudit au moins un ensemble ; et
si ledit seuil prédéterminé n'est pas dépassé, la réalisation (750) d'opérations d'essais supplémentaires pour vérifier une correspondance entre ledit au moins un ensemble et ledit modèle prédéfini.

9. Procédé selon la revendication 8, dans lequel lesdites opérations d'essais supplémentaires (750) sont subordonnées au fait que le au moins un ensemble forme des relations prédéfinies.

10. Système de détection de configurations de repères de sécurité miniatures à l'intérieur de documents et d'images, dans lequel les repères de sécurité miniatures se présentent sous la forme de repères de sécurité miniatures dispersés et comprennent des repères de données ou une combinaison de repères de données et de repères d'ancres, le système comprenant :

des moyens pour sous-échantillonner une image reçue, dans lequel ladite image reçue comprend une représentation numérique d'au moins un destinataire possible des repères de sécurité miniatures dispersés, dans lequel ledit sous-échantillonnage génère une image à résolution réduite de ladite image reçue, et dans lequel chaque ledit repère de sécurité miniature dispersé est composé d'une pluralité de dots disséminés ;
des moyens pour réaliser une détection de points maximum/minimum à l'aide de ladite image à résolution réduite et à l'aide d'une caractéristique de repère, ladite caractéristique de repère comprenant une différence de couleur entre les repères de sécurité miniatures et un arrière-plan ;
des moyens pour grouper lesdits points maximum/minimum pour former au moins un ensemble en fonction de distances à l'emplacement entre lesdits points maximum/minimum ;
des moyens pour contrôler une configuration de groupe pour faire correspondre lesdits ensembles avec une configuration de modèle prédéfini ; et
des moyens pour réaliser une vérification de paramètre de dot pour vérifier un emplacement de repères et une configuration de repères entre ladite image à résolution initiale reçue et une spécification de dot de modèle prédéfini, dans lequel à partir de chaque point dans les groupes qui satisfont à un contrôle de configuration de groupe, la position correspondante dans l'image initiale est trouvée, et dans lequel ladite configuration de repères comprend au moins un repère de sécurité miniature dispersé, dans lequel ladite spécification de dot de modèle prédéfini comprend une description de ladite pluralité de dots disséminés, dans lequel ladite description comprend au moins un paramètre de dot sélectionné dans le groupe comprenant une taille de dot, le nombre desdits dots dans ledit repère de sécurité miniature et une position de dot relative.

*FIG. 1*

*FIG. 2*

*310*

29 EA

FIG. 3

*410*

ALGORITHM
STORE

*420*

DETECTION
COMPONENT

DETECTION
MODULE

*460*

INTERPRETATION
MODULE

ANALYZER                    *440*

DATABASE                    *450*

*430*

FIG. 4

510 — SUB-SAMPLING

520 — POINTS DETECTION

530 — POINTS GROUPING

540 — CONFIGURATION CHECKING

550 — DOT PARAMETER VERIFICATION

## FIG. 5

*620*

*610*

GROUP POINTS EQUAL TEMPLATE POINTS? — NO → DISCARD GROUP

YES

*630*

ANCHOR POINTS ASSIGNED? — NO → MATCH POINTS IN GROUP WITH POINTS IN TEMPLATE

*640*

YES

*650* MATCH ANCHOR POINTS IN GROUP WITH ANCHOR POINTS IN TEMPLATE

*660* CALCULATE DISTANCES BETWEEN ANCHOR POINTS AND REMAINING POINTS IN GROUP

*670* MATCH GROUP DISTANCES WITH TEMPLATE DISTANCES

*690* FURTHER TESTS ← YES — ERRORLESS THAN THRESHOLD? — NO

*680*

## FIG. 6

710 — CHECK NUMBER
OF POINTS

720 — ESTABLISH DISTANCE
MATRIX

730 — COMPARE DISTANCE MATRIX
WITH TEMPLATE DISTANCE
MATRIX

740 — GROUP
POINTS EQUAL TEMPLATE
POINTS?

750 — PERFORM
FURTHER
TESTING

YES

NO

760 — DISCARD

## FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060115110 A, Rodriguez
- US 6694042 B, Seder
- US 7002704 B, Fan
- EP 0917113 A2
- EP 1059800 A2
- US 20020044677 A1
- US 317768 A, Fan
- US 472695 A, Fan

**Non-patent literature cited in the description**

- **A. ROSENFELD ; A. C. KAK.** Digital Picture Processing. Academic Press, 1982